# EUROPEAN PATENT APPLICATION

(11) **EP 4 350 236 A1**
(43) Date of publication of application: **10.04.2024**
(21) Application number: 21944116.9
(22) Date of filing: 02.06.2021
(51) Int. Cl.: F24F 11/38

(54) **SYSTEM AND METHOD FOR ASSISTING IN OPERATION FOR MAINTAINING AIR-CONDITIONING SYSTEM**

(71) Applicant: MITSUBISHI ELECTRIC CORPORATION, Chiyoda-ku Tokyo 100-8310 (JP)
(72) Inventor: ISHIGAKI, Mitsuhiro, Tokyo 100-8310 (JP)
(74) Representative: Witte, Weller & Partner Patentanwälte mbB
(86) International application number: PCT/JP2021/021012
(87) International publication number: WO 2022/254612

(57) **Abstract**

A system (1000) includes: an abnormality detection device (1); a group of databases (100); a maintenance management device (3, 4); and a maintenance assistance device (2). The abnormality detection device (1) is configured to detect at least one abnormality cause from operation data of at least one air conditioning system (40) by using a trained model. The group of databases (100) includes a database (DB1) in which identification information about each of the at least one abnormality cause or each of the at least one air conditioning system (40) is associated with specific information about a maintenance task required to eliminate the abnormality cause. The maintenance management device (3, 4) is configured to manage a maintenance task for each of the at least one air conditioning system (40). The maintenance assistance device (2) is configured to transmit, to the maintenance management device (3, 4), maintenance information determined using specific information associated, in the group of databases (100), with an abnormality cause detected by the abnormality detection device (1).

## Description

### System

### TECHNICAL FIELD

The present disclosure relates to a system and a method for assisting a maintenance task for an air conditioning system.

### BACKGROUND ART

There has been conventionally known a maintenance assistance system that assists a maintenance task for an air conditioning system. For example, Japanese Patent No. 6806240 (PTL 1) discloses an air conditioning management system that determines whether an air conditioner is placed in a prescribed region based on air conditioner placement region information and maintenance region information about the prescribed region, the prescribed region being a region where periodic replacement of a metal component is required after placement of the air conditioner. According to the air conditioning management system, a manager or the like of the air conditioner can perform maintenance for replacement of the metal component at appropriate timing, based on a result of determination by the air conditioner management system.

### CITATION LIST

### PATENT LITERATURE

PTL 1: Japanese Patent No. 6806240

### SUMMARY OF INVENTION

### TECHNICAL PROBLEM

According to the air conditioning management system disclosed in PTL 1, when the air conditioner is placed in a region where corrosion of the metal component of the air conditioner exposed to outdoor air progresses relatively quickly, a maintenance task can be performed for an abnormality cause of the corrosion of the metal component of the air conditioner, before a failure of the air conditioner occurs due to the abnormality cause. However, various causes are assumed as the abnormality cause of the air conditioner. PTL 1 does not take into account a configuration that allows a maintenance task for a cause other than the abnormality cause of the corrosion of the metal component of the air conditioner at appropriate timing.

The present disclosure has been made to solve the above-described problem, and an object thereof is to perform a maintenance task for an air conditioning system at appropriate timing.

### SOLUTION TO PROBLEM

A system according to an aspect of the present disclosure includes: an abnormality detection device; a group of databases; a maintenance management device; and a maintenance assistance device. The abnormality detection device is configured to detect at least one abnormality cause from operation data of at least one air conditioning system by using a trained model. The group of databases includes a database in which identification information about each of the at least one abnormality cause or each of the at least one air conditioning system is associated with specific information about a maintenance task required to eliminate the abnormality cause. The maintenance management device is configured to manage a maintenance task for each of the at least one air conditioning system. The maintenance assistance device is configured to transmit, to the maintenance management device, maintenance information determined using specific information associated, in the group of databases, with an abnormality cause detected by the abnormality detection device.

A system according to another aspect of the present disclosure includes: an abnormality detection device; a maintenance management device; and a maintenance assistance device. The abnormality detection device is configured to detect at least one abnormality cause from operation data of at least one air conditioning system by using a trained model. The maintenance management device is configured to manage a maintenance task for each of the at least one air conditioning system. The maintenance assistance device is configured to calculate a priority of each of the at least one abnormality cause from the operation data. The maintenance assistance device determines a schedule of at least one maintenance task corresponding, respectively, to the at least one abnormality cause, using statistical data of a maintenance task for the at least one air conditioning system in a reference period, and transmits the schedule to the maintenance management device, the schedule being determined such that when the priority of each of the at least one abnormality cause detected from the operation data is relatively higher, a date of a maintenance task required to eliminate the abnormality cause is included in a specific time period of the reference period. In the statistical data, the number of maintenance tasks for the at least one air conditioning system in the specific time period is smaller than the number of maintenance tasks in a time period of the reference period other than the specific time period.

A method according to another aspect of the present disclosure includes: detecting, by an abnormality detection device, at least one abnormality cause from operation data of at least one air conditioning system by using a trained model; and transmitting, to a maintenance management device, maintenance information determined using specific information associated, in a group of databases, with an abnormality cause detected by the abnormality detection device, the maintenance management device being configured to manage a maintenance task for each of the at least one air conditioning system, the group of databases including a database in which each of the at least one abnormality cause is associated with specific information about a maintenance task required to eliminate the abnormality cause.

A method according to another aspect of the present disclosure includes: detecting, by an abnormality detection device, at least one abnormality cause from operation data of at least one air conditioning system by using a trained model; calculating, by a maintenance assistance device, a priority of each of the at least one abnormality cause from the operation data; determining, by the maintenance assistance device, a schedule of at least one maintenance task corresponding, respectively, to the at least one abnormality cause, using statistical data of a maintenance task for the at least one air conditioning system in a reference period, the schedule being determined such that when the priority of each of the at least one abnormality cause detected from the operation data is relatively higher, a date of a maintenance task required to eliminate the abnormality cause is included in a specific time period of the reference period; and transmitting, by the maintenance assistance device, the schedule to a maintenance management device configured to manage a maintenance task for each of the at least one air conditioning system. In the statistical data, the number of maintenance tasks for the at least one air conditioning system in the specific time period is smaller than the number of maintenance tasks in a time period of the reference period other than the specific time period.

### ADVANTAGEOUS EFFECTS OF INVENTION

In the system and the method according to the present disclosure, the at least one abnormality cause is detected from the operation data of the at least one air conditioning system by using the trained model, and thus, a maintenance task for an air conditioning system can be performed at appropriate timing.

### BRIEF DESCRIPTION OF DRAWINGS

Fig. 1 is a block diagram showing an example of configurations of a maintenance assistance system, and a plurality of air conditioning systems whose states are monitored by the maintenance assistance system, according to a first embodiment.
Fig. 2 is a functional block diagram showing a configuration of the air conditioning system in Fig. 1.
Fig. 3 shows an example of operation data that reflects the state of the air conditioning system in Fig. 1.
Fig. 4 is a block diagram showing a functional configuration of an abnormality detection device in Fig. 1.
Fig. 5 shows an example of a neural network included in each of an operating frequency estimation model, a degree-of-opening estimation model and a rotation speed estimation model that are regression models.
Fig. 6 shows an example of a neural network included in an abnormality cause estimation model that is a classification model.
Fig. 7 is a flowchart showing a learning process by a learning unit in Fig. 4.
Fig. 8 shows ground truth data of a specific parameter, and a time chart of the specific parameter estimated by a trained model.
Fig. 9 is a flowchart showing an inference process by an inference unit in Fig. 4.
Fig. 10 shows a time chart of a specific parameter estimated by a trained model, a normal region of the parameter, and a time chart of an actual specific parameter.
Fig. 11 is a flowchart showing a flow of a process performed by a maintenance assistance device in Fig. 1 when the maintenance assistance device receives an abnormality cause from the abnormality detection device.
Fig. 12 is a flowchart showing a flow of a process performed by the maintenance assistance device when the maintenance assistance device receives contents of a maintenance task for the air conditioning system in Fig. 1 from a terminal device of a maintenance worker having performed the maintenance task.
Fig. 13 is a block diagram showing a hardware configuration of the abnormality detection device in Fig. 1.
Fig. 14 is a block diagram showing a hardware configuration of the maintenance assistance device in Fig. 1.
Fig. 15 is a block diagram showing a hardware configuration of each maintenance management device in Fig. 1.
Fig. 16 is a block diagram showing an example of configurations of a maintenance assistance system, and air conditioning systems whose states are monitored by the maintenance assistance system, according to a second embodiment.
Fig. 17 is a flowchart showing a flow of a process performed by a maintenance assistance device in Fig. 16 when the maintenance assistance device receives a plurality of abnormality causes from an abnormality detection device.
Fig. 18 is a block diagram showing an example of configurations of a maintenance assistance system, and air conditioning systems whose states are monitored by the maintenance assistance system, according to a third embodiment.
Fig. 19 is a bar graph showing an example of statistical data used by a maintenance assistance device in Fig. 18.
Fig. 20 is a flowchart showing a flow of a process performed by the maintenance assistance device in Fig. 18 when the maintenance assistance device receives a plurality of abnormality causes from an abnormality detection device.
Fig. 21 is a block diagram showing an example of configurations of a maintenance assistance system, and air conditioning systems whose states are monitored by the maintenance assistance system, according to a modification of the third embodiment.
Fig. 22 is a flowchart showing an inference process performed by an abnormality detection device in Fig. 21.
Fig. 23 is a flowchart showing a flow of a process performed by a maintenance assistance device in Fig. 21 when the maintenance assistance device receives a plurality of abnormality causes from the abnormality detection device.
Fig. 24 is a block diagram showing an example of configurations of a maintenance assistance system, and air conditioning systems whose states are monitored by the maintenance assistance system, according to a fourth embodiment.
Fig. 25 is a flowchart showing a flow of a process performed by a maintenance assistance device in Fig. 24 when the maintenance assistance device receives a plurality of abnormality causes from an abnormality detection device.

### DESCRIPTION OF EMBODIMENTS

Hereinafter, embodiments of the present disclosure will be described in detail with reference to the drawings, in which the same or corresponding portions are denoted by the same reference characters and description thereof will not be repeated in principle.

### First Embodiment

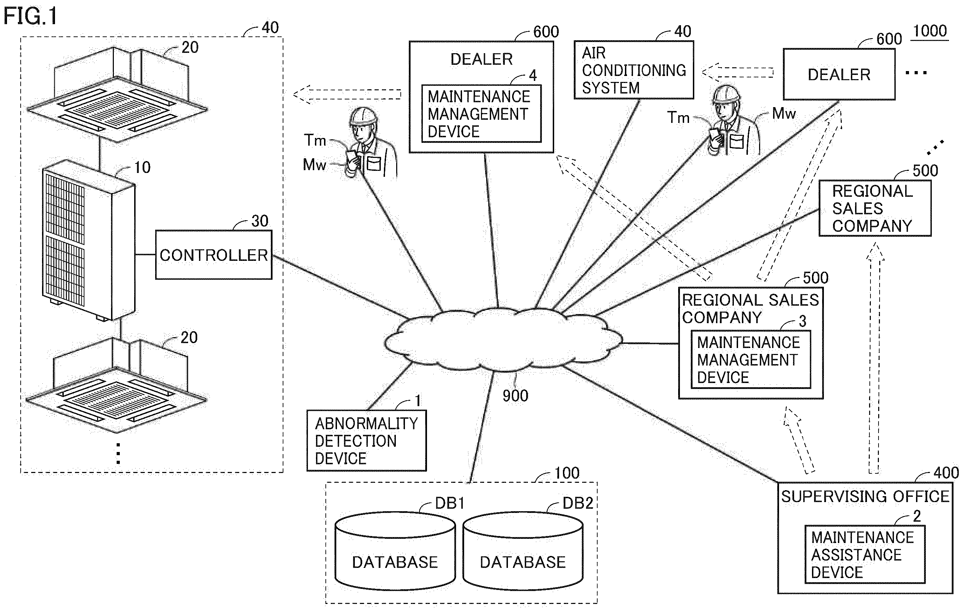

Fig. 1 is a block diagram showing an example of configurations of a maintenance assistance system 1000, and a plurality of air conditioning systems 40 whose states are monitored by maintenance assistance system 1000, according to a first embodiment. As shown in Fig. 1, maintenance assistance system 1000 includes an abnormality detection device 1, a maintenance assistance device 2, a maintenance management device 3, a maintenance management device 4, and a group of databases 100. The plurality of air conditioning systems 40 and the components of maintenance assistance system 1000 are connected to each other via a network 900. Network 900 includes, for example, the Internet and a cloud system. The number of air conditioning systems 40 monitored by maintenance assistance system 1000 may be one.

Air conditioning system 40 includes a plurality of indoor units 20, an outdoor unit 10 and a controller 30. Each of the plurality of indoor units 20 is arranged in an indoor space and is connected to outdoor unit 10. Outdoor unit 10 is arranged in a space (outdoor space) outside the indoor space. The number of indoor units 20 included in air conditioning system 40 may be one.

Outdoor unit 10 includes a compressor, an outdoor heat exchanger (first heat exchanger) and an outdoor fan (blower). Each of the plurality of indoor units 20 includes an expansion valve and an indoor heat exchanger (second heat exchanger). Refrigerant is supplied from the compressor included in outdoor unit 10 to each of the plurality of indoor units 20. The refrigerant circulates between each of the plurality of indoor units 20 and outdoor unit 10.

Controller 30 includes a thermostat and controls air conditioning system 40 in an integrated manner. Controller 30 is connected to maintenance assistance system 1000 via network 900.

Maintenance assistance device 2 is arranged in a supervising office 400 (first location). Maintenance management device 3 is arranged in a regional sales company 500 (second location). Maintenance management device 4 is arranged in a dealer 600 (second location). For example, when supervising office 400 is located in a first region (e.g., Japan or Asia), regional sales company 500 is located in a second region (e.g., Europe) different from the first region. Supervising office 400 manufactures air conditioning system 40 and supplies air conditioning system 40 to regional sales company 500. Regional sales company 500 located in the second region supplies air conditioning system 40 supplied from supervising office 400 to dealer 600 located in the second region. Dealer 600 sells air conditioning system 40 and manages a maintenance worker Mw who performs a maintenance task for air conditioning system 40. That is, supervising office 400 supplies air conditioning system 40 to dealer 600 located in each region through regional sales company 500 located in the region.

Maintenance worker Mw has a terminal device Tm connected wirelessly to network 900. Terminal device Tm includes, for example, a smartphone or a tablet PC. Terminal device Tm receives information about the maintenance task for air conditioning system 40 (e.g., a location of air conditioning system 40, contents of the maintenance task, a schedule of the maintenance task, or maintenance information from maintenance assistance device 2). Maintenance worker Mw inputs, to terminal device Tm, contents of the maintenance task actually performed on air conditioning system 40 (e.g., information about a component actually used in repair). Terminal device Tm transmits the contents of the maintenance task to maintenance assistance device 2.

Group of databases 100 includes a database DB 1 (first database) and a database DB2 (second database). In database DB 1, each of a plurality of abnormality causes of air conditioning system 40 is associated with information (specific information) about a component (first specific component) of air conditioning system 40 required to eliminate the abnormality cause. In database DB2 (second database), each of at least one component included in air conditioning system 40 is associated with a quantity of stock of the component in regional sales company 500 and dealer 600. Databases DB 1 and DB2 are updated by maintenance assistance device 2. Database DB2 may be updated by maintenance management devices 3 and 4.

When an abnormality occurs in air conditioning system 40 and dealer 600 receives a request to repair air conditioning system 40 from a user, a cause of the abnormality cannot in some cases be identified only from information (e.g., an error code) from the user. Therefore, the repair cannot be completed in a maintenance task (primary task) initially performed on air conditioning system 40 by maintenance worker Mw in response to the request for repair, and the abnormality cause can be known for the first time in the primary task. When dealer 600 does not have a component required to eliminate the abnormality cause, dealer 600 places an order of the component to regional sales company 500 corresponding to dealer 600. When regional sales company 500 does not have the component, regional sales company 500 places an order of the component to supervising office 400. In response to the order from regional sales company 500, supervising office 400 ships the component of air conditioning system 40 corresponding to the order to regional sales company 500. Regional sales company 500 ships the component received from supervising office 400 to dealer 600. Dealer 600 instructs maintenance worker Mw to perform a maintenance task that requires the component. Maintenance worker Mw having received the instruction from dealer 600 completes the repair of air conditioning system 40 by using the component.

As described above, when supervising office 400 that supplies the component of air conditioning system 40 and dealer 600 that is responsible for the maintenance task for air conditioning system 40 are located in different regions, a time period from the order of the component by dealer 600 to the arrival of the component at dealer 600 is likely to become long, depending on a distance between the two regions. Therefore, a time period from the occurrence of the abnormality in air conditioning system 40 to the completion of the repair of air conditioning system 40 may become relatively long. During this time period, air conditioning system 40 cannot operate normally, which may cause a decrease in degree of satisfaction of the user of air conditioning system 40.

Accordingly, in maintenance assistance system 1000 according to the first embodiment, abnormality detection device 1 detects at least one abnormality cause from operation data of air conditioning system 40 by using a trained model. Then, maintenance assistance device 2 identifies, from the abnormality cause, a component of air conditioning system 40 required to eliminate the abnormality cause by referring to database DB 1, and transmits information about the component to dealer 600 that is responsible for the maintenance task for air conditioning system 40 of which the abnormality cause was detected. In addition, maintenance assistance device 2 automatically determines whether to ship the component from supervising office 400 by referring to database DB2, and transmits a result of determination to the same dealer 600. Maintenance assistance device 2 ships the component to dealer 600 when determining that dealer 600 responsible for the maintenance task is lacking in the required component, and also ships the component to dealer 600 in response to a request for shipment from dealer 600. By referring to a not-shown database in which air conditioning system 40 is associated with dealer 600 responsible for the maintenance task, maintenance assistance device 2 extracts dealer 600 to which the information about the component or the result of determination as to whether to ship the component should be transmitted. According to maintenance assistance system 1000, before the abnormality of air conditioning system 40 progresses to such an extent that the abnormality is recognized by the user, the cause of the abnormality can be detected when a sign of the abnormality appears in the operation data. In addition, stock checking for the component in regional sales company 500 and dealer 600 becomes unnecessary, and thus, the component can be quickly supplied from supervising office 400 to dealer 600. According to maintenance assistance system 1000, the maintenance task for air conditioning system 40 can be performed at appropriate timing.

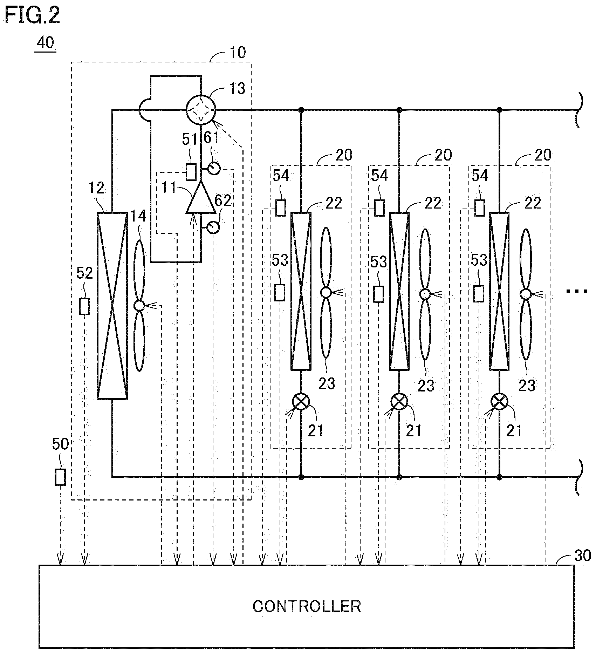

Fig. 2 is a functional block diagram showing a configuration of air conditioning system 40 in Fig. 1. As shown in Fig. 2, outdoor unit 10 includes a compressor 11, an outdoor heat exchanger 12 (first heat exchanger), a four-way valve 13, an outdoor fan 14 (blower), temperature sensors 51 and 52, and pressure sensors 61 and 62. Each of the plurality of indoor units 20 includes an expansion valve 21, an indoor heat exchanger 22 (second heat exchanger), an indoor fan 23, and temperature sensors 53 and 54. A temperature sensor 50 is arranged in the outdoor space. Expansion valve 21 includes, for example, a linear expansion valve (LEV). Each of temperature sensors 50 to 54 includes a thermistor.

Operation modes of air conditioning system 40 includes a heating mode, a cooling mode and a defrosting mode. In the heating mode, four-way valve 13 connects a discharge port of compressor 11 to indoor heat exchangers 22 and connects outdoor heat exchanger 12 to a suction port of compressor 11. In the heating mode, the refrigerant circulates in the order of compressor 11, four-way valve 13, indoor heat exchangers 22, expansion valves 21, and outdoor heat exchanger 12. In the cooling mode and the defrosting mode, four-way valve 13 connects the discharge port of compressor 11 to outdoor heat exchanger 12 and connects indoor heat exchangers 22 to the suction port of compressor 11. In the cooling mode and the defrosting mode, the refrigerant circulates in the order of compressor 11, four-way valve 13, outdoor heat exchanger 12, expansion valves 21, and indoor heat exchangers 22.

Temperature sensor 50 measures a temperature (outdoor air temperature) of the outdoor space, and outputs the outdoor air temperature to controller 30. Temperature sensor 51 measures a temperature (discharge temperature) of the refrigerant discharged from compressor 11, and outputs the discharge temperature to controller 30. Temperature sensor 52 measures a temperature (evaporation temperature or condensation temperature) of the refrigerant passing through outdoor heat exchanger 12, and outputs the temperature to controller 30. Temperature sensor 53 measures a temperature (condensation temperature or evaporation temperature) of the refrigerant passing through indoor heat exchanger 22, and outputs the temperature to controller 30. Temperature sensor 54 measures a temperature (suction temperature or blowout temperature) of air passing through indoor heat exchanger 22, and outputs the temperature to controller 30. Pressure sensor 61 measures a pressure (high pressure) of the refrigerant discharged from compressor 11, and outputs the high pressure to controller 30. Pressure sensor 62 measures a pressure (low pressure) of the refrigerant suctioned to compressor 11, and outputs the low pressure to controller 30.

Controller 30 controls an operating frequency of compressor 11 to control an amount of the refrigerant discharged per unit time by compressor 11. Controller 30 controls a degree of opening of expansion valves 21. Controller 30 controls four-way valve 13 to switch a circulation direction of the refrigerant. Controller 30 controls a rotation speed of each of outdoor fan 14 and indoor fans 23 to control an amount of air blown per unit time by the fan. Controller 30 associates operation data that reflects the state of the air conditioning system with the measurement time, and transmits the operation data to the abnormality detection system.

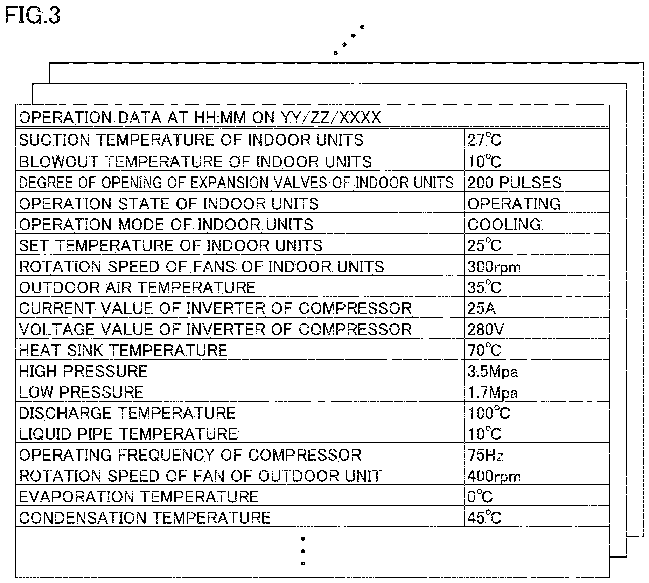

Fig. 3 shows an example of the operation data that reflects the state of air conditioning system 40 in Fig. 1. As shown in Fig. 3, the operation data includes, for example, the outdoor air temperature, the discharge temperature, the evaporation temperature, the condensation temperature, the suction temperature, the blowout temperature, the high pressure, the low pressure, the operating frequency of compressor 11, the degree of opening of expansion valves 21, the operation mode, an operation state (operating, stop or standby), the rotation speed of each of outdoor fan 14 and indoor fans 23, a temperature (set temperature) of the indoor space set by the user, a current value of an inverter of compressor 11, a voltage value of the inverter, a temperature of a heat sink included in outdoor unit 10, and a temperature (liquid pipe temperature) of a liquid pipe (pipe through which liquid refrigerant flows) that connects outdoor unit 10 and indoor units 20.

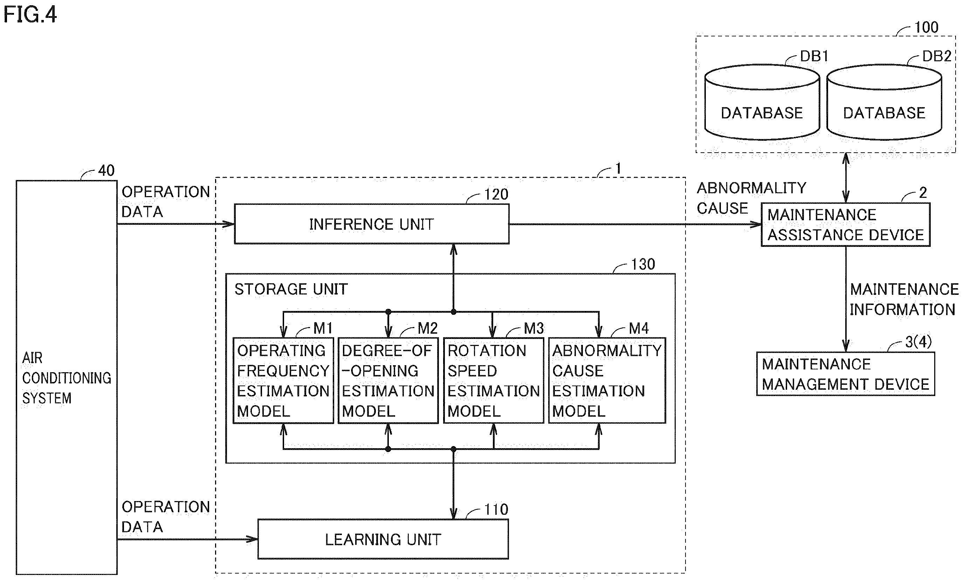

Fig. 4 is a block diagram showing a functional configuration of abnormality detection device 1 in Fig. 1. As shown in Fig. 4, abnormality detection device 1 includes a learning unit 110, an inference unit 120 and a storage unit 130. An operating frequency estimation model M1, a degree-of-opening estimation model M2, a rotation speed estimation model M3, and an abnormality cause estimation model M4 are stored in storage unit 130. At least one of operating frequency estimation model M1, degree-of-opening estimation model M2 and rotation speed estimation model M3, and abnormality cause estimation model M4 may only be stored in storage unit 130.

Operating frequency estimation model M1 is a regression model that receives the parameters other than the operating frequency of compressor 11, of the parameters included in the operation data of air conditioning system 40, and outputs the operating frequency of compressor 11 (specific parameter). Degree-of-opening estimation model M2 is a regression model that receives the parameters other than the degree of opening of expansion valves 21, of the parameters included in the operation data of air conditioning system 40, and outputs the degree of opening of expansion valves 21 (specific parameter). Rotation speed estimation model M3 is a regression model that receives the parameters other than the rotation speed of outdoor fan 14, of the parameters included in the operation data of air conditioning system 40, and outputs the rotation speed of outdoor fan 14 (specific parameter). Abnormality cause estimation model M4 is a classification model that receives the specific parameter estimated by each of operating frequency estimation model M1, degree-of-opening estimation model M2 and rotation speed estimation model M3, and the actual specific parameter, and estimates the abnormality cause of air conditioning system 40. Each of operating frequency estimation model M1, degree-of-opening estimation model M2, rotation speed estimation model M3, and abnormality cause estimation model M4 includes, for example, a neural network. The operating frequency of compressor 11, the degree of opening of expansion valves 21, and the rotation speed of outdoor fan 14 are basic amounts of operation in variable refrigerant flow (VRF) control.

Learning unit 110 acquires a plurality of pieces of operation data from air conditioning system 40. Learning unit 110 learns a relationship between the operation data and each of the operating frequency of compressor 11, the degree of opening of expansion valves 21, and the rotation speed of outdoor fan 14 by using training data created using each of the plurality of pieces of operation data. Learning unit 110 converts each of operating frequency estimation model M1, degree-of-opening estimation model M2 and rotation speed estimation model M3 into a trained model by using the training data. A period and an interval of acquisition of the operation data are arbitrary. A general artificial intelligence (AI) technique can be applied to clustering and weighting of the parameters included in the operation data.

Learning unit 110 learns a relationship between the abnormality cause of air conditioning system 40 and the specific parameter estimated by each of trained operating frequency estimation model M1, trained degree-of-opening estimation model M2 and trained rotation speed estimation model M3 and the actual specific parameter, and converts abnormality cause estimation model M4 into a trained model. The operating frequency of compressor 11, the degree of opening of expansion valves 21 and the rotation speed of outdoor fan 14 estimated by trained operating frequency estimation model M1, trained degree-of-opening estimation model M2 and trained rotation speed estimation model M3, respectively, as well as the actual operating frequency (actual value of the specific parameter) of compressor 11, the actual degree of opening (actual value of the specific parameter) of expansion valves 21 and the actual rotation speed (actual value of the specific parameter) of outdoor fan 14 are, for example, input to abnormality cause estimation model M4. Abnormality cause estimation model M4 classifies the plurality of input specific parameters into any one of the plurality of abnormality causes.

The learning algorithm used by learning unit 110 may be a known algorithm such as supervised learning, unsupervised learning, or reinforcement learning. The case where a neural network is applied will be described below.

Learning unit 110 learns a relationship between the operation data and each of the operating frequency of compressor 11, the degree of opening of expansion valves 21, and the rotation speed of outdoor fan 14 by supervised learning in accordance with, for example, a neural network model. Here, the supervised learning refers to a method of learning features included in training data by giving the training data, which is a set of input data (operation data) and ground truth data (label), to learning unit 110, and inferring a result from the input. The operating frequency of compressor 11, the degree of opening of expansion valves 21, and the rotation speed of outdoor fan 14 when air conditioning system 40 is in a normal state (e.g., during an accidental failure period) can be used as the ground truth data.

The neural network of the regression model includes an input layer including a plurality of neurons, an intermediate layer (hidden layer) including a plurality of neurons, and an output layer including one neuron. The intermediate layer may include one layer or two or more layers.

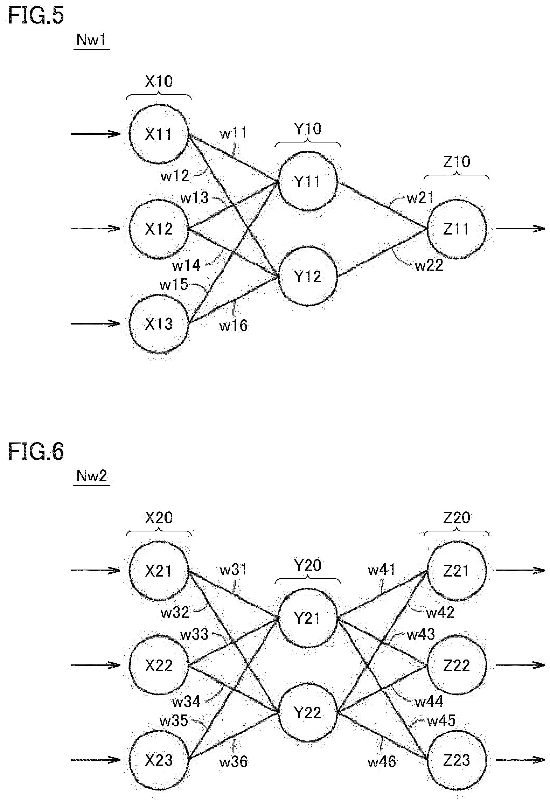

Fig. 5 shows an example of the neural network included in each of operating frequency estimation model M1, degree-of-opening estimation model M2 and rotation speed estimation model M3 that are regression models. As shown in Fig. 5, a neural network Nw1 includes an input layer X10, an intermediate layer Y10, and an output layer Z10. Input layer X10 includes neurons X11, X12 and X13. Intermediate layer Y10 includes neurons Y11 and Y12. Output layer Z10 includes a neuron Z11. Input layer X10 and intermediate layer Y10 are fully connected to each other. Intermediate layer Y10 and output layer Z10 are fully connected to each other.

When a plurality of inputs are input to neurons X11 to X13 of input layer X10, the values thereof are multiplied by weights w11 to w16, and are input to neurons Y11 and Y12 of intermediate layer Y10. Outputs from neurons Y11 and Y12 are multiplied by weights w21 and w22, and are output from neuron Z11 of output layer Z10. The output result from output layer Z10 varies depending on the values of weights w11 to w16 and w21 and w22.

Neural network Nw1 learns a relationship between the operation data and the corresponding specific parameter by supervised learning in accordance with the training data created using the operation data acquired from air conditioning system 40. That is, the weight and bias of neural network Nw1 are updated by back propagation with respect to the error between the result output from the output layer in response to an input of the operation data to the input layer and the ground truth data such that the result approaches the specific parameter of the ground truth data.

Learning unit 110 learns a relationship between the abnormality cause of air conditioning system 40 and the specific parameter estimated by each of trained operating frequency estimation model M1, trained degree-of-opening estimation model M2 and trained rotation speed estimation model M3 and the actual specific parameter by supervised learning in accordance with, for example, a neural network model.

The neural network of the classification model includes an input layer including a plurality of neurons, an intermediate layer (hidden layer) including a plurality of neurons, and an output layer including a plurality of neurons. The intermediate layer may include one layer or two or more layers.

Fig. 6 shows an example of the neural network included in abnormality cause estimation model M4 that is a classification model. As shown in Fig. 6, a neural network Nw2 includes an input layer X20, an intermediate layer Y20, and an output layer Z20. Input layer X20 includes neurons X21, X22 and X23. Intermediate layer Y20 includes neurons Y21 and Y22. Output layer Z20 includes neurons Z21, Z22 and Z23. The number of neurons included in output layer Z20 is the number of the plurality of abnormality causes. Input layer X20 and intermediate layer Y20 are fully connected to each other. Intermediate layer Y20 and output layer Z20 are fully connected to each other.

When a plurality of inputs (specific parameters) are input to neurons X21 to X23 of input layer X20, the values thereof are multiplied by weights w31 to w36, and are input to neurons Y21 and Y22 of intermediate layer Y20. Outputs from neurons Y21 and Y22 are multiplied by weights w41, w42, w43, w44, w45, and w46, and are output from neurons Z21, Z22 and Z23 of output layer Z20. The output result from output layer Z20 varies depending on the values of weights w31 to w36 and w41 to w46.

Neural network Nw2 learns a relationship between the plurality of specific parameters and the abnormality cause of air conditioning system 40 by supervised learning. That is, the weight and bias of neural network Nw2 are updated by back propagation with respect to the error between the result output from the output layer in response to an input of the plurality of specific parameters to the input layer and the ground truth data such that the result corresponds to the abnormality cause of the ground truth data.

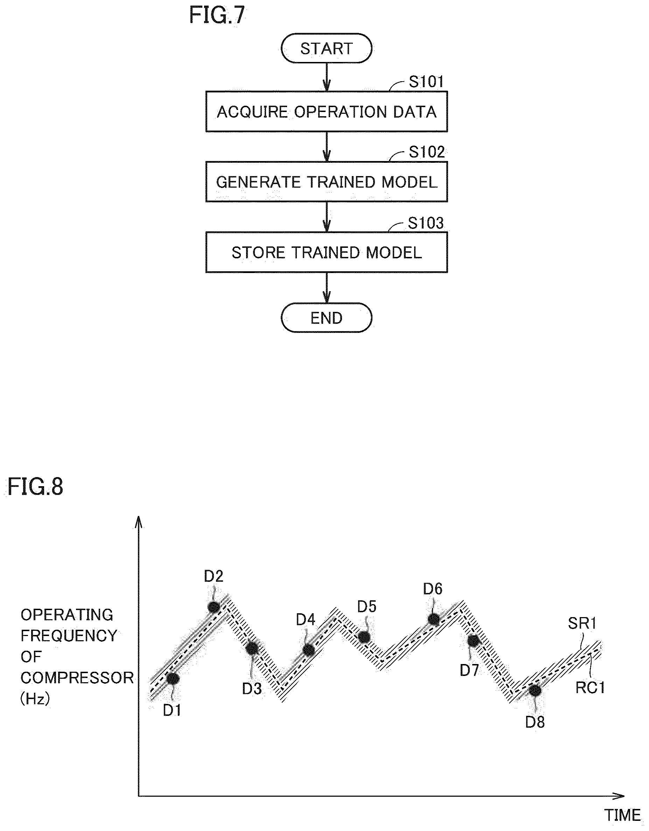

Fig. 7 is a flowchart showing a learning process by learning unit 110 in Fig. 4. Hereinafter, a step will be simply denoted as "S". As shown in Fig. 7, in S101, learning unit 110 acquires the operation data, and moves the process to S102. In S102, learning unit 110 learns a relationship between the operation data and each of the operating frequency of compressor 11, the degree of opening of expansion valves 21, and the rotation speed of outdoor fan 14 by supervised learning in accordance with the operation data, and converts each of operating frequency estimation model M1, degree-of-opening estimation model M2 and rotation speed estimation model M3 into a trained model, and moves the process to S103. In S103, learning unit 110 stores trained operating frequency estimation model M1, trained degree-of-opening estimation model M2 and trained rotation speed estimation model M3 in storage unit 130, and ends the learning process.

Fig. 8 shows ground truth data D1, D2, D3, D4, D5, D6, D7, and D8 of a specific parameter and a time chart RC1 of the specific parameter estimated by a trained model. In Fig. 8, the case where the specific parameter is the operating frequency of compressor 11 will be described. Each of dots D1 to D8 represents the operating frequency of compressor 11 when air conditioning system 40 is in a normal state. Time chart RC1 is time-series data of the operating frequency of compressor 11 estimated by trained operating frequency estimation model M1. A region SR1 represents a region where the operating frequency of compressor 11 is normal. Normal region SR1 is set as a region where a deviation rate from time chart RC1 (estimated value of the trained model) is within a reference value (e.g., 5%). That is, normal region RC1 is estimated by operating frequency estimation model M1. For example, when the deviation rate is equal to or lower than 5% and the operating frequency of compressor 11 estimated by trained operating frequency estimation model M1 is 100 Hz at a certain time, normal region SR1 of compressor 11 at this time is within the range of 95 Hz to 105 Hz. When the operating frequency of compressor 11 at this time is included within the range of 95 Hz to 105 Hz, it is determined that air conditioning system 40 is in a normal state. When the operating frequency of compressor 11 at this time is not included within the range of 95 Hz to 105 Hz, it is determined that air conditioning system 40 is in an abnormal state. The same applies as well to the degree of opening of expansion valves 21 and the rotation speed of outdoor fan 14. The deviation rate from the estimated value of the trained model can be set by the user and can be determined as appropriate by experiments on an actual machine, or simulation.

When the actual operating frequency of compressor 11 is higher than the normal region of the estimated operating frequency of compressor 11, defects such as a shortage of the refrigerant, poor heat transfer in outdoor unit 10, and failure to close expansion valves 21 are estimated as causes of the abnormality. When the actual operating frequency of compressor 11 is lower than normal region SR1, defects such as a shortage of the refrigerant, poor heat transfer in indoor units 20, and failure to open expansion valves 21 are estimated as causes of the abnormality. For example, the component of air conditioning system 40 required to eliminate the defect of the failure to open expansion valves 21 is expansion valve 21.

When the actual degree of opening of expansion valves 21 is larger than the normal region of the estimated degree of opening of expansion valves 21, a shortage of the refrigerant (during cooling) is estimated as a cause of the abnormality. When the actual degree of opening of expansion valves 21 is smaller than the normal region, a shortage of the refrigerant (during heating), poor heat transfer in outdoor unit 10, and poor heat transfer in indoor units 20 are estimated as causes of the abnormality.

When the actual rotation speed of outdoor fan 14 is higher than the normal region of the estimated rotation speed of outdoor fan 14, defects such as a shortage of the refrigerant (during heating), poor heat transfer in outdoor unit 10, and failure to open expansion valves 21 are estimated as causes of the abnormality. When the actual rotation speed of outdoor fan 14 is lower than the normal region, defects such as a shortage of the refrigerant (during cooling) and failure to close expansion valves 21 are estimated as causes of the abnormality.

Referring again to Fig. 4, inference unit 120 acquires the pieces of operation data from air conditioning system 40. Inference unit 120 estimates the operating frequency of compressor 11, the degree of opening of expansion valves 21, the rotation speed of outdoor fan 14, and the abnormality cause of air conditioning system 40, using trained models M1 to M4 stored in storage unit 130, respectively. In the first embodiment, a description is given of the configuration in which the operating frequency of compressor 11, the degree of opening of expansion valves 21, the rotation speed of outdoor fan 14, and the abnormality cause of air conditioning system 40 are estimated using the trained models learned in learning unit 110 in Fig. 4, respectively. However, the operating frequency of compressor 11, the degree of opening of expansion valves 21, the rotation speed of outdoor fan 14, and the abnormality cause of air conditioning system 40 may be estimated using trained models learned in another environment.

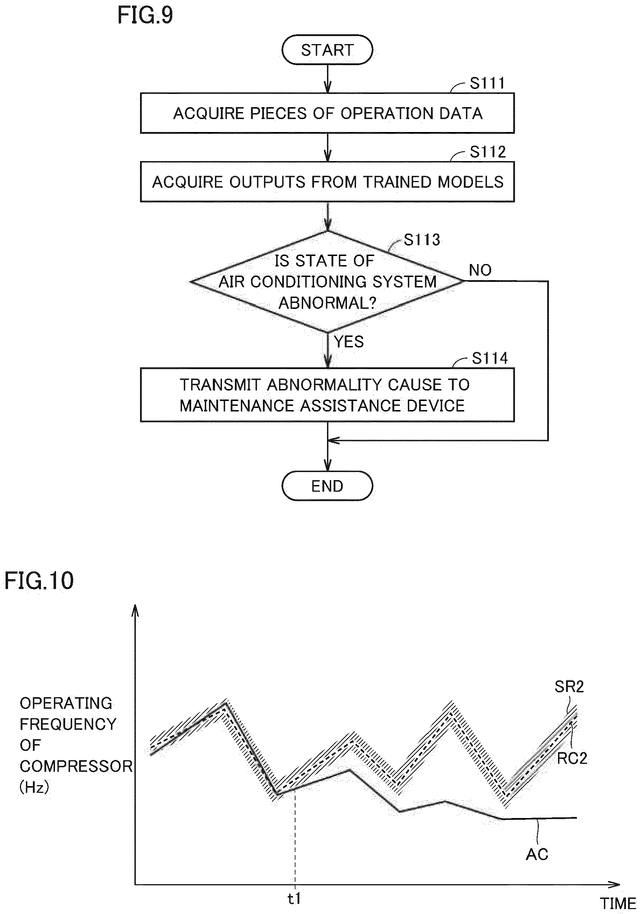

Fig. 9 is a flowchart showing an inference process by inference unit 120 in Fig. 4. As shown in Fig. 9, in S111, inference unit 120 acquires the pieces of operation data of air conditioning system 40, and moves the process to S112. In S112, inference unit 120 inputs the pieces of operation data into trained models M1 to M3 stored in storage unit 130, estimates the operating frequency of compressor 11, the degree of opening of expansion valves 21, and outdoor fan 14, and moves the process to S113. In S113, inference unit 120 inputs, into abnormality cause estimation model M4, the operating frequency of compressor 11 output from trained operating frequency estimation model M1, the degree of opening of expansion valves 21 output from trained degree-of-opening estimation model M2, and the rotation speed of outdoor fan 14 output from trained rotation speed estimation model M3, and determines whether the state of air conditioning system 40 is abnormal. For example, when the actual value of at least one of the operating frequency of compressor 11, the degree of opening of expansion valves 21, and the rotation speed of outdoor fan 14 is not included within the normal range, inference unit 120 determines that the state of air conditioning system 40 is abnormal. When the state of air conditioning system 40 is abnormal (YES in S113), inference unit 120 transmits the abnormality cause (e.g., defect of the failure to open expansion valves 21) estimated by abnormality cause estimation model M4 to maintenance assistance device 2 in S114, and ends the process. When the state of air conditioning system 40 is normal (NO in S113), inference unit 120 ends the process.

Fig. 10 shows a time chart RC2 of a specific parameter estimated by a trained model, a normal region SR2 of the parameter, and a time chart AC of an actual specific parameter. In Fig. 10, the case where the specific parameter is the operating frequency of compressor 11 will be described. As shown in Fig. 10, after time 11, the actual operating frequency of compressor 11 is not included within normal region SR2. After time 11, the abnormality cause of air conditioning system 40 is transmitted from abnormality detection device 1 to maintenance assistance device 2.

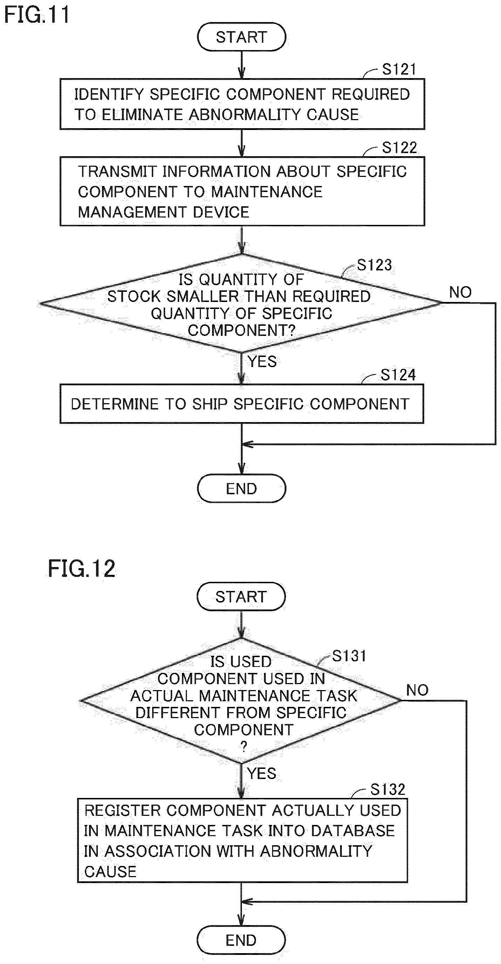

Fig. 11 is a flowchart showing a flow of a process performed by maintenance assistance device 2 in Fig. 1 when maintenance assistance device 2 receives the abnormality cause from abnormality detection device 1. As shown in Fig. 11, in S121, maintenance assistance device 2 identifies the specific component (first specific component) required to eliminate the abnormality cause by referring to database DB1, and moves the process to S122. In S122, maintenance assistance device 2 transmits information about the specific component to maintenance management devices 3 and 4, and moves the process to S123. In S123, maintenance assistance device 2 determines whether the quantity of stock associated with the specific component (quantity of stock of the specific component in dealer 600 and regional sales company 500) is smaller than a required quantity of the specific component required to eliminate the abnormality cause, by referring to database DB2. When the quantity of stock is smaller than the required quantity of the specific component (YES in S123), maintenance assistance device 2 determines to ship a quantity of the specific component that exceeds the shortage (quantity obtained by subtracting the quantity of stock from the required quantity), instructs a logistic system to ship the specific component to dealer 600 in S124, and ends the process. When the quantity of stock is equal to or larger than the required quantity of the specific component (NO in S123), maintenance assistance device 2 ends the process. Since the specific component required to eliminate the abnormality cause is shipped automatically, the maintenance task for air conditioning system 40 can be performed at earlier timing. Maintenance assistance device 2 may end the process shown in Fig. 11 in S122 and wait for an order of the specific component from dealer 600 or regional sales company 500.

Fig. 12 is a flowchart showing a flow of a process performed by maintenance assistance device 2 when maintenance assistance device 2 receives contents of a maintenance task (specific maintenance task) for air conditioning system 40 in Fig. 1 from terminal device Tm of maintenance worker Mw having performed the maintenance task. As shown in Fig. 12, in S131, maintenance assistance device 2 determines whether a used component (second specific component) actually used to eliminate the abnormality cause (specific abnormality cause) subjected to the specific maintenance task is different from the specific component identified by maintenance assistance device 2 to eliminate the specific abnormality cause. When the used component is different from the specific component (YES in S131), maintenance assistance device 2 registers the used component into database DB 1 in association with the specific abnormality cause in S132, and ends the process. When the used component is the same as the specific component (NO in S131), maintenance assistance device 2 ends the process. For each of a plurality of components associated with a certain abnormality cause in database DB 1, maintenance assistance device 2 may assign a degree of importance to the component in accordance with the number of times of actual use of the component in the actual maintenance task for the abnormality cause. Since the contents of the actual maintenance task is reflected in database DB1, it is possible to enhance the possibility that the abnormality cause is eliminated by the component associated with the abnormality cause estimated by abnormality detection device 1 in database DB1.

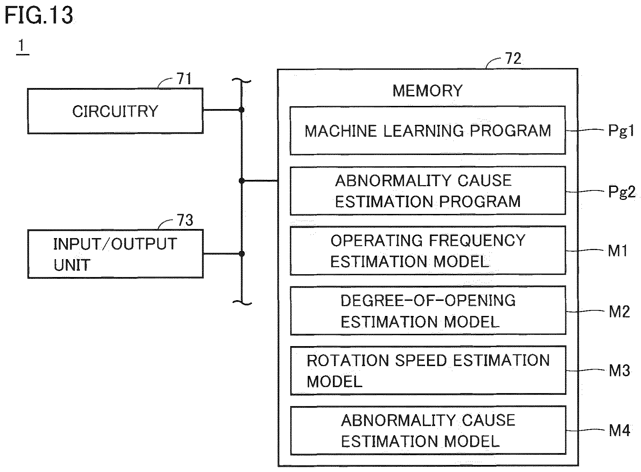

Fig. 13 is a block diagram showing a hardware configuration of abnormality detection device 1 in Fig. 1. As shown in Fig. 13, abnormality detection device 1 includes a circuitry 71, a memory 72 and an input/output unit 73. Circuitry 71 includes a central processing unit (CPU) that executes a program stored in memory 72. Circuitry 71 may include a graphics processing unit (GPU). The function of abnormality detection device 1 is implemented by software, firmware, or a combination of the software and the firmware. The software or the firmware is described as a program and stored in memory 72. Circuitry 71 reads and executes the program stored in memory 72. The CPU is also called a central processing unit, a processing unit, an operation unit, a microprocessor, a microcomputer, a processor, or a digital signal processor (DSP).

Memory 72 includes a non-volatile or volatile semiconductor memory (e.g., a random access memory (RAM), a read only memory (ROM), a flash memory, an erasable programmable read only memory (EPROM), or an electrically erasable programmable read only memory (EEPROM)), and a magnetic disk, a flexible disk, an optical disk, a compact disk, a minidisc, or a digital versatile disc (DVD).

A machine learning program Pg1, an abnormality cause estimation program Pg2, operating frequency estimation model M1, degree-of-opening estimation model M2, rotation speed estimation model M3, and abnormality cause estimation model M4 are stored in memory 72. Circuitry 71 that executes machine learning program Pg1 corresponds to learning unit 110 in Fig. 4. Circuitry 71 that executes abnormality cause estimation program Pg2 corresponds to inference unit 120 in Fig. 4. Memory 72 corresponds to storage unit 130 in Fig. 4.

Input/output unit 73 receives an operation from the user and outputs a processing result to the user. Input/output unit 73 includes, for example, a mouse, a keyboard, a touch panel, a display, and a speaker.

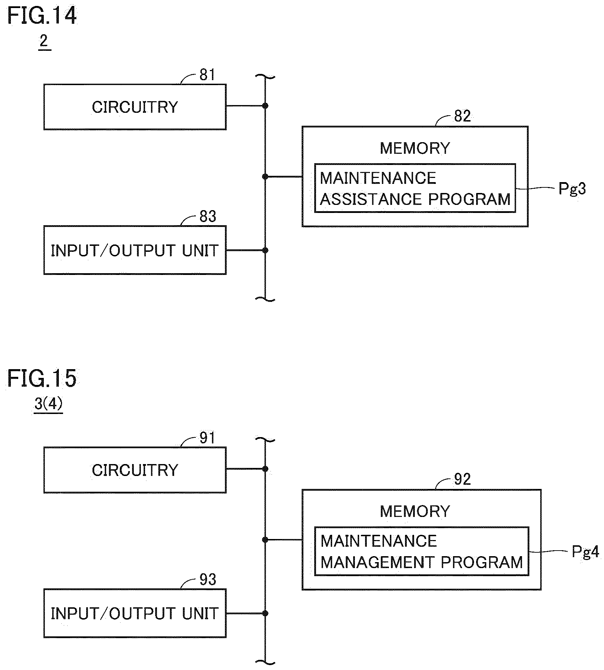

Fig. 14 is a block diagram showing a hardware configuration of maintenance assistance device 2 in Fig. 1. As shown in Fig. 14, maintenance assistance device 2 includes a circuitry 81, a memory 82 and an input/output unit 83. Circuitry 81, memory 82 and input/output unit 83 have structures similar to those of circuitry 71, memory 72 and input/output unit 73 in Fig. 12, respectively. A maintenance assistance program Pg3 is stored in memory 82. The process shown in Fig. 11 and the process shown in Fig. 12 are performed by circuitry 81 that executes maintenance assistance program Pg3.

Fig. 15 is a block diagram showing a hardware configuration of each of maintenance management devices 3 and 4 in Fig. 1. As shown in Fig. 15, each of maintenance management devices 3 and 4 includes a circuitry 91, a memory 92 and an input/output unit 93. Circuitry 91, memory 92 and input/output unit 93 have structures similar to those of circuitry 71, memory 72 and input/output unit 73 in Fig. 12, respectively. A maintenance management program Pg4 is stored in memory 92.

Although the case where the supervised learning is applied to the learning algorithm used by learning unit 110 is described in the first embodiment, the learning algorithm is not limited to the supervised learning. In addition to the supervised learning, reinforcement learning, unsupervised learning, semi-supervised learning or the like can also be applied to the learning algorithm.

In addition, deep learning that learns extraction of a feature quantity itself can also be used as the learning algorithm used by learning unit 110. Machine learning may be performed in accordance with other known methods such as, for example, a neural network, genetic programming, functional logic programming, or a support vector machine.

In the embodiment, abnormality detection device 1 is described as being separate from air conditioning system 40 and maintenance assistance device 2 and being connected to air conditioning system 40 via network 900. However, abnormality detection device 1 may be built into air conditioning system 40 or maintenance assistance device 2. Alternatively, abnormality detection device 1 may exist on a cloud server. In addition, in the first embodiment, a description is given of the case in which supervising office 400 is located in the first region (e.g., Japan or Asia), and regional sales company 500 and dealer 600 are located in the second region (e.g., Europe) different from the first region. However, supervising office 400 and regional sales company 500 and dealer 600 may be located in the same European region (e.g., supervising office 400 may be located in Italy, and regional sales company 500 and dealer 600 may be located in France), or may be located in the same country (e.g., supervising office 400 may be located in Tokyo, and regional sales company 500 and dealer 600 may be located in Hokkaido). In either case, the maintenance task can be performed at appropriate timing.

As described above, in the system and the method according to the first embodiment, the maintenance task for the air conditioning system can be performed at appropriate timing. In addition, in the system and the method according to the first embodiment, since the specific component required to eliminate the abnormality cause is shipped automatically, the maintenance task for the air conditioning system can be performed at earlier timing. Furthermore, in the system and the method according to the first embodiment, it is possible to enhance the possibility that the abnormality cause is eliminated by the component associated with the abnormality cause estimated by the abnormality detection device in the first database.

### Second Embodiment

In a second embodiment, a description will be given of a configuration in which a route for going around placement locations of the plurality of air conditioning systems for which the plurality of abnormality causes are detected, respectively, is optimized using a database in which identification information about each of the plurality of air conditioning systems is associated with a placement location of the air conditioning system.

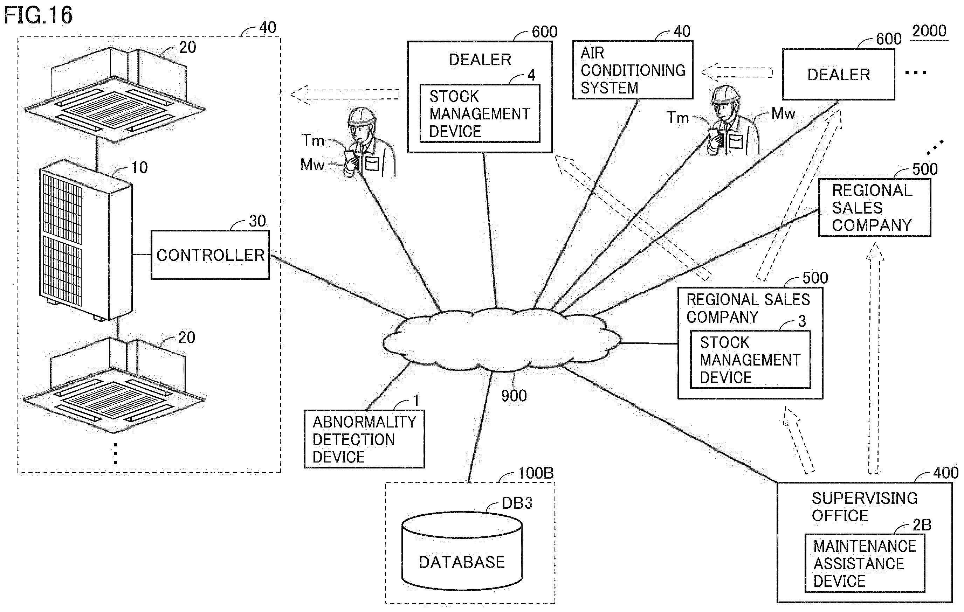

Fig. 16 is a block diagram showing an example of configurations of a maintenance assistance system 2000, and air conditioning systems 40 whose states are monitored by maintenance assistance system 2000, according to the second embodiment. In the configuration of maintenance assistance system 2000, maintenance assistance device 2 and group of databases 100 in Fig. 1 are replaced with a maintenance assistance device 2B and a group of databases 100B, respectively. Since the remaining configuration of maintenance assistance system 2000 is the same as the configuration of maintenance assistance system 1000, a description of the same configuration will not be repeated.

As shown in Fig. 16, group of databases 100B includes a database DB3 (third database). In database DB3, identification information about each of the plurality of air conditioning systems 40 is associated with a placement location (specific information) of air conditioning system 40. Database DB3 is updated by maintenance assistance device 2B.

Maintenance assistance device 2B optimizes a route (go-around route) for going around a plurality of placement locations that are associated, respectively, with identifiers of the plurality of air conditioning systems 40 corresponding, respectively, to the plurality of abnormality causes detected by abnormality detection device 1 at reference intervals (e.g., one day), in database DB3. Maintenance assistance device 2B transmits the optimized route (maintenance information) to maintenance management devices 3 and 4 and terminal device Tm. In the optimization of the go-around route, a distance of the go-around route or a travel cost is, for example, minimized. Since the go-around route is optimized, the maintenance task for the plurality of air conditioning systems 40 can be made efficient.

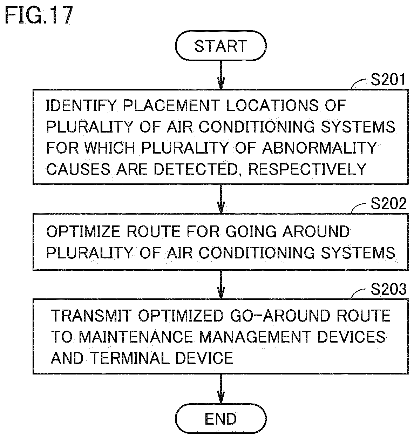

Fig. 17 is a flowchart showing a flow of a process performed by maintenance assistance device 2B in Fig. 16 when maintenance assistance device 2B receives the plurality of abnormality causes from abnormality detection device 1. As shown in Fig. 17, in S201, maintenance assistance device 2B identifies the placement locations of the plurality of air conditioning systems 40 for which the plurality of abnormality causes are detected, respectively, by referring to database DB3, and moves the process to S202. In S202, maintenance assistance device 2B optimizes the route for going around the plurality of air conditioning systems 40, and moves the process to S203. In S203, maintenance assistance device 2B transmits the optimized go-around route to maintenance management devices 3 and 4 and terminal device Tm, and ends the process.

As described above, in the system and the method according to the second embodiment, the maintenance task for the air conditioning systems can be performed at appropriate timing. In addition, in the system and the method according to the second embodiment, since the go-around route is optimized, the maintenance task for the plurality of air conditioning systems can be made efficient.

### Third Embodiment

In a third embodiment, a description will be given of a configuration in which a schedule of a plurality of maintenance tasks is determined using a database in which each of the plurality of abnormality causes detected by the abnormality detection device is associated with a priority (specific information) of a maintenance task required to eliminate the abnormality cause, and statistical data of a maintenance task in a reference period, the schedule being determined such that a date of a maintenance task having a relatively higher priority is included in a time period of the reference period during which the number of maintenance tasks is expected to be relatively small.

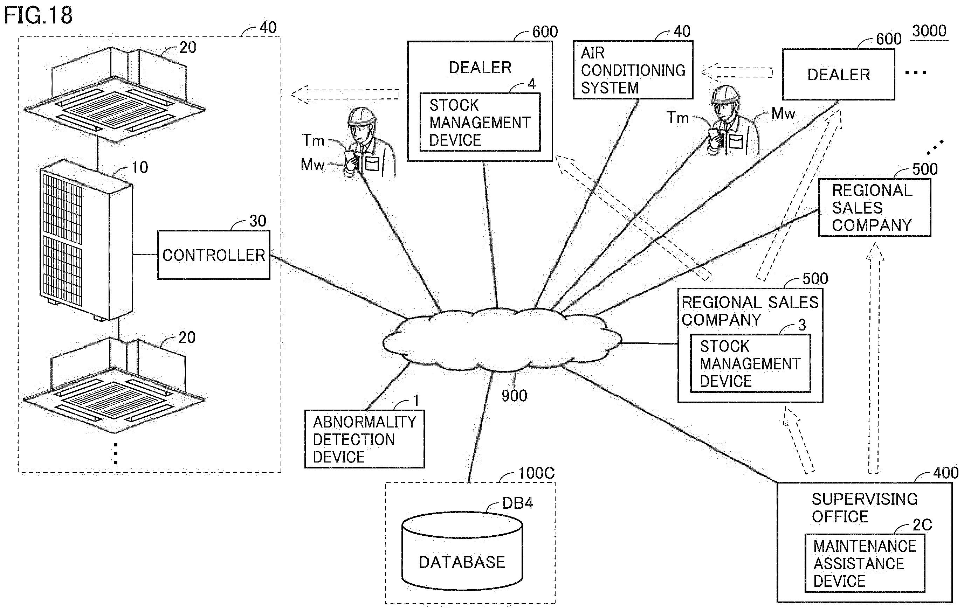

Fig. 18 is a block diagram showing an example of configurations of a maintenance assistance system 3000, and air conditioning systems 40 whose states are monitored by maintenance assistance system 3000, according to the third embodiment. In the configuration of maintenance assistance system 3000, maintenance assistance device 2 and group of databases 100 in Fig. 1 are replaced with a maintenance assistance device 2C and a group of databases 100C, respectively. Since the remaining configuration of maintenance assistance system 3000 is the same as the configuration of maintenance assistance system 1000, a description of the same configuration will not be repeated.

As shown in Fig. 18, group of databases 100C includes a database DB4 (fourth database). In database DB4, each of the plurality of abnormality causes is associated with a priority of the abnormality cause. Database DB4 is updated by maintenance assistance device 2C. The priority is, for example, set to become higher, as a prediction period necessary for the maintenance task required to eliminate the abnormality cause becomes longer.

Maintenance assistance device 2C divides one year into a low load period (specific time period) and a high load period by using statistical data of the maintenance task (e.g., the number of maintenance tasks per month in the previous year) for the plurality of air conditioning systems 40. For example, the low load period includes a month in which the number of maintenance tasks is equal to or smaller than the average number of maintenance tasks in one month in the previous year, and the high load period includes a month in which the number of maintenance tasks is larger than the average number of maintenance tasks in one month in the previous year.

Maintenance assistance device 2C determines a schedule of a plurality of maintenance tasks such that when the priority associated with each of the plurality of abnormality causes in database DB4 is relatively higher, a date of a maintenance task required to eliminate the abnormality cause is included in the low load period. Maintenance assistance device 2C transmits the schedule (maintenance information) to maintenance management devices 3 and 4 and terminal device Tm. Since the schedule of the plurality of maintenance tasks is set such that a date of a maintenance task having a relatively higher priority is included in the low load period having time to spare, the maintenance task having a relatively higher priority can be completed reliably.

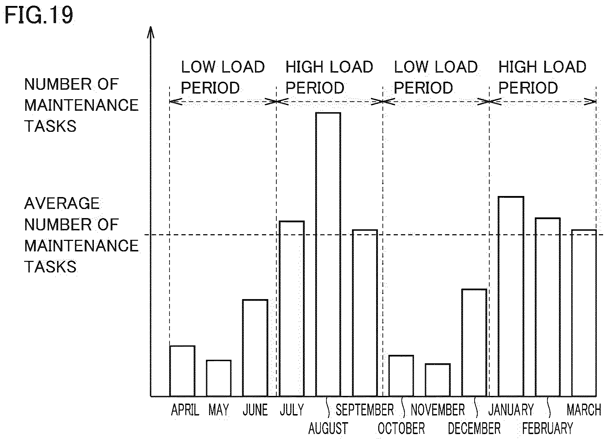

Fig. 19 is a bar graph showing an example of the statistical data used by maintenance assistance device 2C in Fig. 18. As shown in Fig. 19, the number of maintenance tasks in each of April to June and October to December is smaller than the average number of maintenance tasks. In contrast, the number of maintenance tasks in each of July to September and January to March is larger than the average number of maintenance tasks. Maintenance assistance device 2C sets April to June and October to December as low load periods, and July to September and January to March as high load periods.

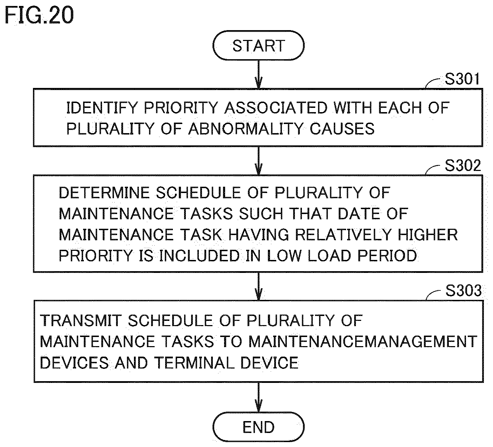

Fig. 20 is a flowchart showing a flow of a process performed by maintenance assistance device 2C in Fig. 18 when maintenance assistance device 2C receives the plurality of abnormality causes from abnormality detection device 1. As shown in Fig. 20, in S301, maintenance assistance device 2C identifies the priority associated with each of the plurality of abnormality causes by referring to database DB4, and moves the process to S302. In S302, maintenance assistance device 2C determines the schedule of the plurality of maintenance tasks corresponding, respectively, to the plurality of abnormality causes such that a date of a maintenance task required to eliminate the abnormality cause having a higher priority is included in the low load period, and moves the process to S303. In S303, maintenance assistance device 2C transmits the schedule to maintenance management devices 3 and 4 and terminal device Tm, and ends the process.

### Modification of Third Embodiment

In a modification of the third embodiment, a description will be given of a configuration in which the priority of each of the plurality of abnormality causes is determined in accordance with a degree of deviation of the actual specific parameter from a normal range of the specific parameter estimated from the operation data of the air conditioning system, without referring to any database.

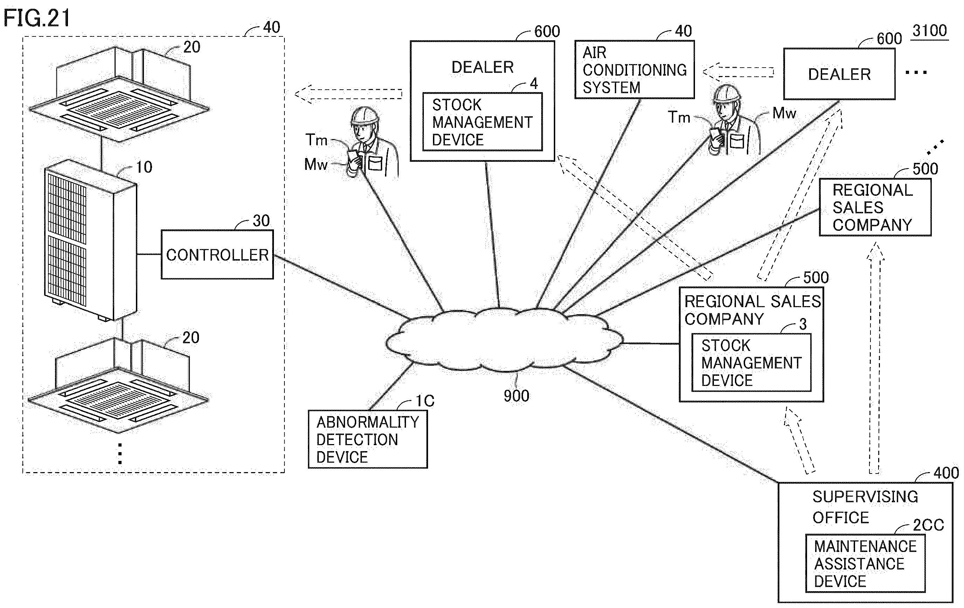

Fig. 21 is a block diagram showing an example of configurations of a maintenance assistance system 3100, and air conditioning systems 40 whose states are monitored by maintenance assistance system 3100, according to the modification of the third embodiment. In the configuration of maintenance assistance system 3100, abnormality detection device 1 and maintenance assistance device 2C in Fig. 18 are replaced with an abnormality detection device 1C and a maintenance assistance device 2CC, respectively, and group of databases 100C is removed. Since the remaining configuration of maintenance assistance system 3100 is the same as the configuration of maintenance assistance system 3000, a description of the same configuration will not be repeated.

Abnormality detection device 1C infers a normal range of the specific parameter of each of the plurality of air conditioning systems 40 from the operation data of each the plurality of air conditioning systems 40 by using the trained model. When the actual value of the specific parameter is not included within the normal range, abnormality detection device 1C infers an abnormality cause (specific abnormality cause) corresponding to the specific parameter, and transmits the abnormality cause, the actual value of the specific parameter, and the normal range to maintenance assistance device 2CC. Maintenance assistance device 2CC sets the priority of the abnormality cause corresponding to the specific parameter to become higher as deviation of the actual value of the specific parameter from the normal range becomes larger. Since the priority of the abnormality cause detected by abnormality detection device 1C can be calculated by maintenance assistance device 2CC, maintenance assistance system 3100 does not require the database in which the abnormality cause is associated with the priority. Since the configuration of maintenance assistance system 3100 can be made simpler than the configuration of maintenance assistance system 3000, the cost required to build maintenance assistance system 3100 can be made lower than the cost required to build maintenance assistance system 3000.

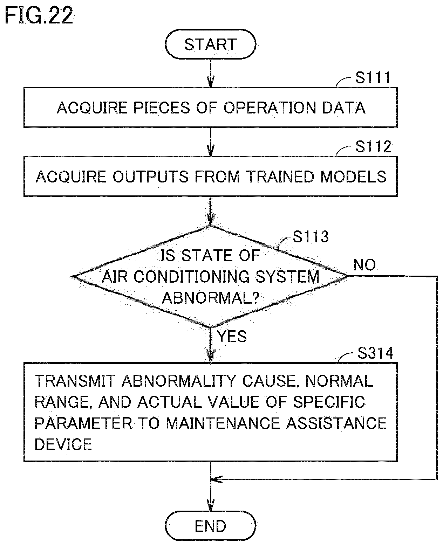

Fig. 22 is a flowchart showing an inference process performed by abnormality detection device 1C in Fig. 21. In the flowchart shown in Fig. 22, S114 in Fig. 9 is replaced with S314. The steps other than S314 in the flowchart shown in Fig. 22 are the same as those in the flowchart shown in Fig. 9. As shown in Fig. 22, abnormality detection device 1C performs S111 to S113 similarly to abnormality detection device 1, and then, transmits the abnormality cause, the normal range of the specific parameter, and the actual value of the specific parameter to maintenance assistance device 2CC in S314, and ends the process.

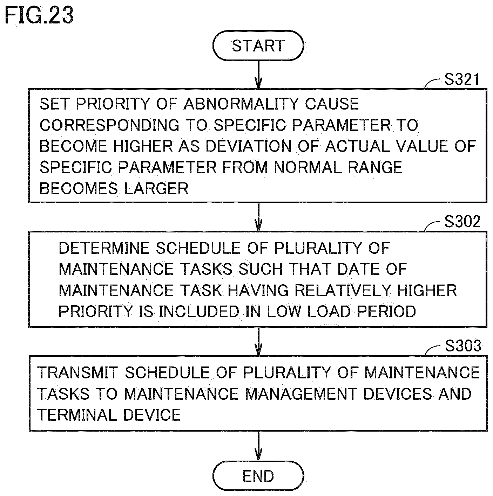

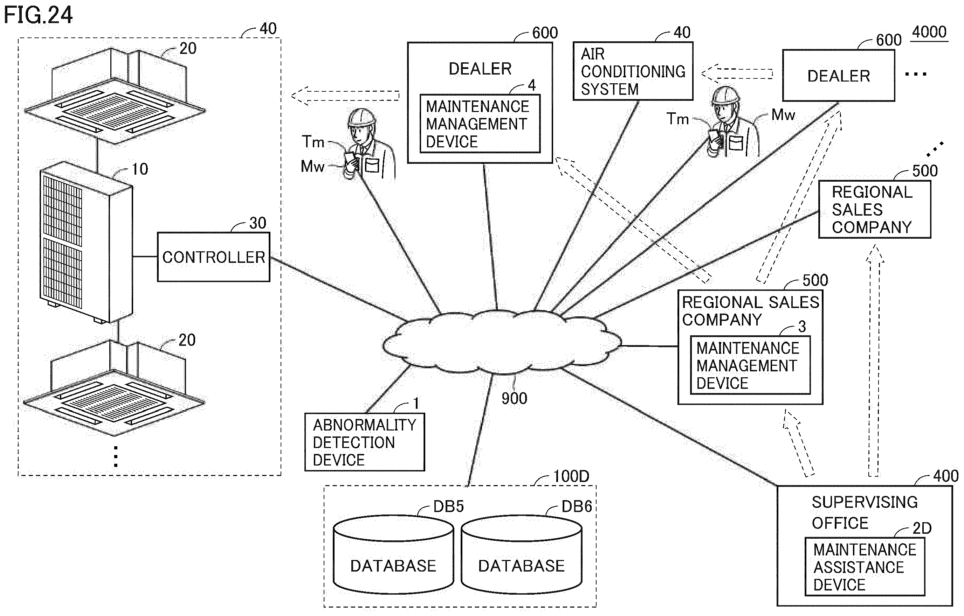

Fig. 23 is a flowchart showing a flow of a process performed by maintenance assistance device 2CC in Fig. 21 when maintenance assistance device 2CC receives the plurality of abnormality causes from abnormality detection device 1C. In the flowchart shown in Fig. 23, S301 in Fig. 20 is replaced with S321. The steps other than S321 in the flowchart shown in Fig. 24 are the same as those in the flowchart shown in Fig. 20. As shown in Fig. 23, in S321, maintenance assistance device 2CC sets the priority of the abnormality cause corresponding to the specific parameter to become higher as deviation of the actual value of the specific parameter from the normal range becomes larger, and moves the process to S302. Maintenance assistance device 2CC performs S302 and S303 similarly to maintenance assistance device 2C, and then, ends the process.

As described above, in the system and the method according to the third embodiment and the modification, the maintenance task for the air conditioning system can be performed at appropriate timing. In addition, in the system and the method according to the third embodiment and the modification, since the schedule of the plurality of maintenance tasks is set such that a date of a maintenance task having a relatively higher priority is included in the specific time period having time to spare, the maintenance task having a relatively higher priority can be completed reliably. Furthermore, in the system and the method according to the modification of the third embodiment, the cost required to build the system can be made lower than the cost in the third embodiment.

### Fourth Embodiment

In a fourth embodiment, a description will be given of a configuration in which a worker that can perform the maintenance task required to eliminate each of the plurality of abnormality causes is identified using a database in which each of the plurality of abnormality causes detected by the abnormality detection device is associated with an ability level of the worker that can perform the maintenance task required to eliminate the abnormality cause, and a database in which each of at least one worker is associated with an ability level of the worker.

Fig. 24 is a block diagram showing an example of configurations of a maintenance assistance system 4000, and air conditioning systems 40 whose states are monitored by maintenance assistance system 4000, according to the fourth embodiment. In the configuration of maintenance assistance system 4000, maintenance assistance device 2 and group of databases 100 in Fig. 1 are replaced with a maintenance assistance device 2D and a group of databases 100D, respectively. Since the remaining configuration of maintenance assistance system 4000 is the same as the configuration of maintenance assistance system 1000, a description of the same configuration will not be repeated.

As shown in Fig. 24, group of databases 100D includes a database DB5 (fifth database) and a database DB6 (sixth database). In database DB5, each of the plurality of abnormality causes detected by abnormality detection device 1 is associated with an ability level (specific information) of the worker that can perform the maintenance task required to eliminate the abnormality cause. The ability level is set to become higher, as a degree of difficulty of the maintenance task required to eliminate the abnormality cause becomes higher. In database DB6, identification information about each of at least one maintenance worker is associated with an ability level of the maintenance worker. The ability level of the maintenance worker is determined based on, for example, contents of the maintenance task performed by the maintenance worker in the past, the number of maintenance tasks, years of experience as the maintenance worker, and a qualification owned by the maintenance worker.

In database DB5, maintenance assistance device 2D identifies the ability level associated with the maintenance task (specific maintenance task) required to eliminate the abnormality cause detected by abnormality detection device 1. In database DB6, maintenance assistance device 2D identifies the maintenance worker (specific worker) associated with an ability level equal to or higher than the ability level associated with the specific maintenance task. Maintenance assistance device 2D transmits information (maintenance information) about the specific worker to maintenance management devices 3 and 4. Maintenance assistance device 2D transmits information about the specific maintenance task to the terminal device of the specific worker. Maintenance assistance device 2D periodically evaluates the maintenance task performed by each maintenance worker, and updates the ability level associated with the maintenance worker in database DB6, in accordance with a result of the evaluation. For example, when the user requests a redo of the maintenance task, maintenance assistance device 2D lowers the ability level of the maintenance worker having performed the maintenance task as an evaluation for the maintenance task.

Since the maintenance worker having the ability level equal to or higher than the ability level associated with the specific maintenance task is identified, an instruction to perform the specific maintenance task can be provided to the maintenance worker that can reliably perform the specific maintenance task. In addition, since the maintenance task performed by each maintenance worker is evaluated periodically, the current ability level of the maintenance worker can be appropriately reflected in database DB6.

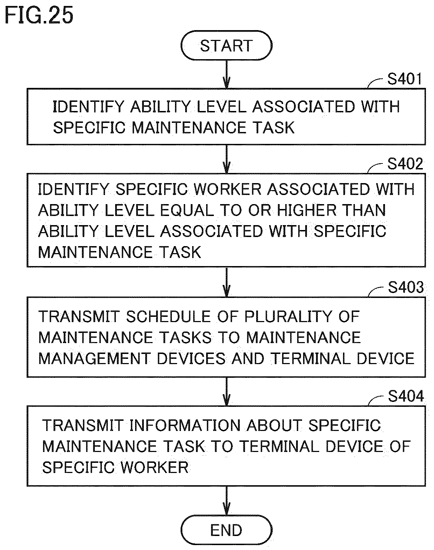

Fig. 25 is a flowchart showing a flow of a process performed by maintenance assistance device 2D in Fig. 24 when maintenance assistance device 2D receives the plurality of abnormality causes from abnormality detection device 1. As shown in Fig. 25, in S401, maintenance assistance device 2D identifies the ability level associated with the specific maintenance task by referring to database DB5, and moves the process to S402. In S402, maintenance assistance device 2D identifies the specific worker associated with the ability level equal to or higher than the ability level associated with the specific maintenance task by referring to database DB6, and moves the process to S403. In S403, maintenance assistance device 2D transmits information about the specific worker to maintenance management devices 3 and 4, and moves the process to S404. In S404, maintenance assistance device 2D transmits information about the specific maintenance task to the terminal device of the specific worker, and ends the process.

As described above, in the system and the method according to the fourth embodiment, the maintenance task for the air conditioning system can be performed at appropriate timing. In addition, in the system and the method according to the fourth embodiment, since the maintenance worker having the ability level equal to or higher than the ability level associated with the specific maintenance task is identified, an instruction to perform the specific maintenance task can be provided to the maintenance worker that can reliably perform the specific maintenance task. Furthermore, since the maintenance task performed by each maintenance worker is evaluated periodically, the current ability level of the maintenance worker can be appropriately reflected in the sixth database.

### Other Modifications

Although maintenance assistance device 2 ships the component required to eliminate the abnormality cause to dealer 600 in the first embodiment, maintenance assistance device 2 may ship the component to the placement location of air conditioning system 40 to be subjected to the maintenance task. When a predetermined abnormality of air conditioning system 40 is detected by abnormality detection device 1 and dealer 600 or maintenance worker Mw selects the placement location of air conditioning system 40 as a shipment destination of the component, maintenance assistance device 2 extracts the placement location corresponding to air conditioning system 40 having the abnormality by referring to database DB3, and ships the required component to the placement location. Since the required component is shipped to the task site, the maintenance task can be started quickly.

Although maintenance assistance device 2 extracts the component required to eliminate the abnormality cause of air conditioning system 40 by referring to database DB1 in the first embodiment, a trained model learned using the abnormality cause of air conditioning system 40 and the component used to eliminate the abnormality cause may be used instead of database DB1. In this case, maintenance assistance device 2 can obtain the component required to eliminate the abnormality cause by using the abnormality cause detected by abnormality detection device 1 and the trained model.

The embodiments disclosed herein are also intended to be implemented in combination as appropriate within a consistent scope. It should be understood that the embodiments disclosed herein are illustrative and non-restrictive in every respect. The scope of the present disclosure is defined by the terms of the claims, rather than the description above, and is intended to include any modifications within the scope and meaning equivalent to the terms of the claims.

### REFERENCE SIGNS LIST

1, 1C abnormality detection device; 2, 2B to 2D maintenance assistance device; 3, 4 maintenance management device; 10 outdoor unit; 11 compressor; 12 outdoor heat exchanger; 13 four-way valve; 14 outdoor fan; 20 indoor unit; 21 expansion valve; 22 indoor heat exchanger; 23 indoor fan; 30 controller; 40 air conditioning system; 50 to 54 temperature sensor; 61, 62 pressure sensor; 71, 81, 91 circuitry; 72, 82, 92 memory; 73, 83, 93 input/output unit; 100, 100B to 100D group of databases; 110 learning unit; 120 inference unit; 130 storage unit; 400 supervising office; 500 regional sales company; 600 dealer; 900 network; 1000, 2000, 3000, 3100, 4000 maintenance assistance system; DB1 to DB6 database; M1 operating frequency estimation model; M2 degree-of-opening estimation model; M3 rotation speed estimation model; M4 abnormality cause estimation model; Mw maintenance worker; Nw1, Nw2 neural network; Pg1 machine learning program; Pg2 abnormality cause estimation program; Pg3 maintenance assistance program; Pg4 maintenance management program; Tm terminal device; X10, X20 input layer; X11 to X13, X21 to X23, Y11, Y12, Y21, Y22, Z11, Z21 to Z23 neuron; Y10, Y20 intermediate layer; Z10, Z20 output layer.

## Claims

1. A system comprising:
an abnormality detection device configured to detect at least one abnormality cause from operation data of at least one air conditioning system by using a trained model;
a group of databases including a database in which identification information about each of the at least one abnormality cause or each of the at least one air conditioning system is associated with specific information about a maintenance task required to eliminate the abnormality cause;
a maintenance management device configured to manage a maintenance task for each of the at least one air conditioning system; and
a maintenance assistance device configured to transmit, to the maintenance management device, maintenance information determined using specific information associated, in the group of databases, with an abnormality cause detected by the abnormality detection device.

2. The system according to claim 1, wherein
the group of databases includes a first database in which each of the at least one abnormality cause is associated with information about a first specific component required to eliminate the abnormality cause as the specific information, and
the maintenance assistance device transmits the information about the first specific component to the maintenance management device as the maintenance information.

3. The system according to claim 2, wherein
the maintenance assistance device is arranged in a first location,
the maintenance management device is arranged in a second location different from the first location,
the group of databases includes a second database in which each of at least one component included in the at least one air conditioning system is associated with a quantity of stock of the component in the second location, and
when a quantity of stock associated with the first specific component is smaller than a required quantity of the first specific component required to eliminate the abnormality cause detected by the abnormality detection device in the second database, the maintenance assistance device determines to ship the first specific component to the second location.

4. The system according to claim 2 or 3, wherein
the maintenance assistance device receives, from a terminal device of a worker having performed a maintenance task for the at least one air conditioning system, information about a second specific component used to eliminate a specific abnormality cause subjected to the maintenance task, and associates the second specific component with the specific abnormality cause in the first database when the second specific component is different from the first specific component.

5. The system according to claim 1, wherein
the group of databases includes a third database in which the identification information about each of the at least one air conditioning system is associated with a placement location of the air conditioning system as the specific information, and
the maintenance assistance device optimizes a route for going around a plurality of placement locations, and transmits the optimized route to the maintenance management device as the maintenance information, the plurality of placement locations being associated, respectively, with identifiers of a plurality of air conditioning systems corresponding, respectively, to the at least one abnormality cause in the third database.

6. The system according to claim 1, wherein
the group of databases includes a fourth database in which each of the at least one abnormality cause is associated with a priority of the abnormality cause as the specific information,
the maintenance assistance device determines a schedule of a plurality of maintenance tasks corresponding, respectively, to the at least one abnormality cause, using statistical data of a maintenance task for the at least one air conditioning system in a reference period, and transmits the schedule to the maintenance management device as the maintenance information, the schedule being determined such that when the priority of each of the at least one abnormality cause in the fourth database is relatively higher, a date of a maintenance task required to eliminate the abnormality cause is included in a specific time period of the reference period, and
in the statistical data, the number of maintenance tasks for the at least one air conditioning system in the specific time period is smaller than the number of maintenance tasks in a time period of the reference period other than the specific time period.

7. The system according to claim 1, wherein
the group of databases includes:
a fifth database in which each of the at least one abnormality cause is associated with an ability level of a worker that can perform a maintenance task required to eliminate the abnormality cause as the specific information; and
a sixth database in which identification information about each of at least one worker is associated with an ability level of the worker, and
the maintenance assistance device identifies an ability level associated with a specific maintenance task required to eliminate the abnormality cause detected by the abnormality detection device in the fifth database, identifies a specific worker associated with an ability level equal to or higher than the ability level associated with the specific maintenance task in the sixth database, and transmits information about the specific worker to the maintenance assistance device as the maintenance information.

8. The system according to claim 7, wherein
the maintenance assistance device transmits information about the specific maintenance task to a terminal device of the specific worker.

9. The system according to claim 7 or 8, wherein
the maintenance assistance device performs an evaluation on the maintenance task performed by each of the at least one worker, and updates an ability level associated with the worker in the sixth database in accordance with a result of the evaluation.

10. A system comprising:
an abnormality detection device configured to detect at least one abnormality cause from operation data of at least one air conditioning system by using a trained model;
a maintenance management device configured to manage a maintenance task for each of the at least one air conditioning system; and
a maintenance assistance device configured to calculate a priority of each of the at least one abnormality cause from the operation data, wherein
the maintenance assistance device determines a schedule of at least one maintenance task corresponding, respectively, to the at least one abnormality cause, using statistical data of a maintenance task for the at least one air conditioning system in a reference period, and transmits the schedule to the maintenance management device, the schedule being determined such that when the priority of each of the at least one abnormality cause detected from the operation data is relatively higher, a date of a maintenance task required to eliminate the abnormality cause is included in a specific time period of the reference period, and
in the statistical data, the number of maintenance tasks for the at least one air conditioning system in the specific time period is smaller than the number of maintenance tasks in a time period of the reference period other than the specific time period.

11. The system according to claim 10, wherein
the abnormality detection device infers a normal range of a specific parameter of each of the at least one air conditioning system from the operation data by using the trained model, and infers a specific abnormality cause corresponding to the specific parameter when an actual value of the specific parameter is not included within the normal range, and
the maintenance assistance device sets a priority of the specific abnormality cause to become higher as deviation of the specific parameter from the normal range becomes larger.

12. The system according to claim 11, wherein
refrigerant circulates in each of the at least one air conditioning system,
the air conditioning system includes an outdoor unit and at least one indoor unit,
the outdoor unit includes a compressor, a first heat exchanger, and a blower configured to blow air to the first heat exchanger,
each of the at least one indoor unit includes an expansion valve and a second heat exchanger,
the refrigerant circulates in order of the compressor, the first heat exchanger, the expansion valve, and the second heat exchanger, or circulates in order of the compressor, the second heat exchanger, the expansion valve, and the first heat exchanger, and
the specific parameter includes at least one of an operating frequency of the compressor, a degree of opening of the expansion valve, and an amount of air blown per unit time by the blower.

13. A method comprising:
detecting, by an abnormality detection device, at least one abnormality cause from operation data of at least one air conditioning system by using a trained model; and
transmitting, to a maintenance management device, maintenance information determined using specific information associated, in a group of databases, with an abnormality cause detected by the abnormality detection device, the maintenance management device being configured to manage a maintenance task for each of the at least one air conditioning system, the group of databases including a database in which each of the at least one abnormality cause is associated with specific information about a maintenance task required to eliminate the abnormality cause.

14. A method comprising:
detecting, by an abnormality detection device, at least one abnormality cause from operation data of at least one air conditioning system by using a trained model;
calculating, by a maintenance assistance device, a priority of each of the at least one abnormality cause from the operation data;
determining, by the maintenance assistance device, a schedule of at least one maintenance task corresponding, respectively, to the at least one abnormality cause, using statistical data of a maintenance task for the at least one air conditioning system in a reference period, the schedule being determined such that when the priority of each of the at least one abnormality cause detected from the operation data is relatively higher, a date of a maintenance task required to eliminate the abnormality cause is included in a specific time period of the reference period; and
transmitting, by the maintenance assistance device, the schedule to a maintenance management device configured to manage a maintenance task for each of the at least one air conditioning system, wherein
in the statistical data, the number of maintenance tasks for the at least one air conditioning system in the specific time period is smaller than the number of maintenance tasks in a time period of the reference period other than the specific time period.
